# EUROPEAN PATENT APPLICATION

(11) **EP 0 612 802 A1**
(43) Date of publication of application: **31.08.1994**
(21) Application number: 94200422.7
(22) Date of filing: 19.02.1994
(51) Int. Cl.: C08L 27/12, C08L 67/00

(54) **Composition of fluoroelastomers and liquid-crystal polymers**

(30) Priority: 24.02.1993 IT MI930348
(71) Applicant: ENIRICERCHE S.p.A., I-20097 S. Donato Milanese (Milano) (IT)
(72) Inventor: Citta, Vincenzo, I-90013 Castel Buono (Palermo) (IT); Pedretti, Ugo, I-20159 Milano (IT); Roggero, Arnaldo, I-20097 San Donato Milanese (Milano) (IT)
(74) Representative: Fusina, Gerolamo

(57) **Abstract**

Fluoroelastomer composition displaying a high section modulus and improved processability, comprising at least one fluoroelastomer and at least a thermotropic liquid-crystal polymer selected from:
(1) a thermotropic copolyester comprising in its molecule units derived from
   (a) a saturated, aliphatic alpha,omega-dicarboxy acid

      HOOC-(CH₂)ₙ-COOH

      wherein n is comprised within the range of from 3 to 8,
   (b) 4,4'-dihydroxybiphenyl,
   (c) 4-hydroxybenzoic acid,
   (d) 2,6-hydroxynaphthoic acid;
(2) a thermotropic copolyester comprising, in its molecule, only units derived from (a), (b) and (c).

## Description

The present invention relates to vulcanizable compositions of fluorinated elastomers and polymeric liquid-crystals, displaying excellent processability and improved mechanical properties.

Under the term "fluorinated elastomers" or "fluoroelastomers" both fluoroelastomers and perfluoroelastomers are meant, i.e., partially or totally fluorinated, non-crystalline polymers or copolymers which display elastomeric properties when they are submitted to vulcanization. A review of the main fluoroelastomers presently available on the market is reported in "Encyclopedia of Polymer Science and Engineering", Vol. 7, page 258.

Fluoroelastomers withstand higher temperatures than 150°C and are stable to oxygen, sulfur oxide, amines and hydrofluoric acid.

Fluoroelastomers are inherently endowed with a considerably high resistance to oils and fuels, alifatic and aromatic solvents, hydraulic fluids, polar solvents and diluted solutions of acids and bases. Furthermore, they are permeable to high temperature gases and are radiation resistant.

Thanks to particular formulations, the chemical resistance can be extended to acids, steam, high-temperature water and concentrated alkalies. In fact, users have available a plurality of fluorinated elastomers having different molecular weight, and different crosslinking agents, e.g., bis-phenol, peroxides, diamines and, last but not least, high-energy radiations.

Thanks to their extremely good properties, fluoroelastomers are enjoying wider and wider applications in particular sectors, e.g., in automotive industry (e.g., O-rings, sealing gaskets, tubes intended to come into contact with fuels).

A use of fluoelastomers is also being developing in petroleum field, in particular when drillings have to be carried out under high depth conditions. In these cases, high temperature and pressure values (higher temperatures than 150°C, and pressures which may easily reach 400 bars), and the presence of aggressive materials (e.g., hydrogen sulfide) make it necessary high-duty materials to be used. As a consequence, the gaskets of the safety valves for oil wells and of the drilling equipment are made from fluorinated elastomers.

However, namely in the field of oil and natural gas drilling, materials are required which display even better performance and higher mechanical properties, in particular as relates hardness, modulus of rigidity (both at low temperature, and at higher temperatures than 150°C), high-temperature compression set.

The present Applicant has now found that the mechanical properties of fluorinated elastomers are considerably enhanced by the presence of particular liquid-crystal polymers, which are also capable of improving the processability characteristics of said fluorinated elastomers.

In accordance therewith, the present invention relates to a fluoroelastomer composition displaying a high section modulus and improved processability, comprising at least one fluoroelastomer and at least one thermotropic liquid-crystal polymer, characterized in that said thermotropic liquid-crystal polymer is selected from:
(1) a thermotropic copolyester comprising, in its molecule, units derived from
   (a) a saturated, aliphatic alpha,omega-dicarboxy acid

      HOOC-(CH₂)ₙ-COOH

      wherein n is comprised within the range of from 3 to 8,
   (b) 4,4'-dihydroxybiphenyl,
   (c) 4-hydroxybenzoic acid,
   (d) 2,6-hydroxynaphthoic acid;
   with the following values of the ratios of the costituting units to each other: (a):(b) = 1, (c+d):(a) comprised within the range of from 1 to 8, (d):(c+d) comprised within the range of from 0.1 to 1;
(2) a thermotropic copolyester comprising, in its molecule, only units derived from (a), (b) and (c) in a molar ratio comprised within the range of from 1:1:0.5 to 1:1:8.

The fluoroelastomers which can be used in the composition according to the present invention are non-crystal line copolymers which, after being submitted to vulcanization, display elastomeric properties. Representative examples for such fluoroelastomers are:
-- vinylidene fluoride (CF₂=CH₂) and chlorotrifluoroethylene (CF₂=CFCl) copolymers;
-- vinylidene fluoride-hexafluoropropylene (CF₂=CFCF₃) copolymers commercially manufactured by 3M (trade name Fluorel) and by Du Pont (trade name Viton);
-- vinylidene fluoride, hexafluoropropylene and tetrafluoroethylene (CF₂=CF₂) terpolymers, manufactured and marketed by Du Pont under their trade name Viton B;
-- vinylidene fluoride and 1-hydropentafluoropropylene copolymers and their terpolymers with tetrafluoroethylene, manufactured and marketed by Montedison under their trade name Tecnoflon;
-- perfluoromethylvinylether (CF₂=CFOCF₃) copolymers with vinylidene fluoride or tetrafluoroethylene, manufactured and marketed by Du Pont under their trade names Viton GLT and Kalrez;
-- polyfluorobutadienes -(-CH₂=CF-CH=CH₂-)-;
-- polyfluoroacrylates CF₃-(CF₂)ₙ-CH₂OOCCH=CH₂;
-- polyfluorosilicones;
-- nitrosofluoroelastomers.

According to the preferred embodiment of the present invention, the fluoroelastomer is selected from polymers or copolymers of vinylidene fluoride, hexafluoropropylene, tetrafluoroethylene.

The fluoroelastomer composition according to the present invention is prepared by simply blending the liquid-crystal polymer (LCP) into the matrix of fluorinated elastomer. Such a blending can be carried out by means of any available blending techniques, e.g., by using a Banbury type mixer, closed or open, continuous or batch mixers.

It is preferable that, before being blended with the fluoroelastomer, LCP is in powder form; in fact, in that way a better blending of LCP and fluoroelastomer can be obtained. However, one might also use LCP in pellet, chip or flake form, or in any other forms, preferably with small particle size in order to facilitate and speed up LCP blending with fluoroelastomer.

In general, LCP is admixed with the fluorinated elastomer in an amount comprised within the range of from 2 to 40 parts of LCP per 100 parts of fluoroelastomer, preferably of from 4 to 30 parts of LCP per 100 parts of fluoroelastomer.

Most elastomeric compositions according to the present invention, by being substantially free from unsaturations, cannot be vulcanized with sulfur. Under this circumstances, the vulcanization can be carried out according to several other procedures, such as by exposure to radiations, peroxides, diamines, bis-phenols and their derivatives, with the vulcanization technique being a function of the applications the end product is intended for. In the case of manufactured articles (for example, O-rings), for which good values of high-temperature compression set are required, the vulcanization is preferably carried out with compounds of onium type having the general formulae R₄N⁺X⁻ and R₄P⁺X⁻, wherein R tipically is butyl and X bromine, coupled with a dihydroxyaromatic compound, e.g., bis-phenol A, bis-phenol AF, bis-phenol S and an acid acceptor selected from CaO, MgO, PbO, ZnO, Ca(OH)₂.

According to an alternative route, the vulcanization of the composition according to the present invention can be effectively carried out in the presence of a ternary system consisting of a peroxide, a co-agent and an acid acceptor as a promoter. In order that the above said vulcanization technique can be applied, it is necessary that the fluoroelastomer is previously modified by means of the incorporation of small amounts of a comonomer displaying an increased sensibility to the attack by free radicals. The preferably used peroxides used for said ternary system suitable for use as a vulcanizer agent are 2,5-dimethyl-2,5-di(t-butylperoxy)-hexane and its analogous hexine. As co-agents, triallyl isocyanurate and triallyl cyanurate, are preferred. The acid acceptors are preferably selected from calcium hydroxide and magnesium oxide.

In the case when the fluoroelastomeric composition according to the present invention contains unsaturations, the vulcanization can be carried out by means of the usual sulfur-based techniques.

The fluoroelastomeric composition according to the present invention may also contain conventional amounts of other additives traditionally used in the field of elastomers, such as carbon black, anti-ageing agents, oils, waxes, and the so-said "white fillers", such as precipitated barium sulfate, calcium carbonate, calcium metasilicate.

For example, carbon black can be contained in amounts comprised within the range of from 1 to 100 parts per 100 parts of fluoroelastomer. Owing to the presence of LCP, however, amounts of carbon black can be used which are comprised within the range of from 1 to 60 parts per 100 parts of fluoroelastomer. In fact, LCP acts it too in the sense of increasing the modulus of the fluoroelastomeric composition. Therefore, a high elastic modulus can be obtained by using lower carbon black amounts than normally used.

As regards the liquid-crystal polymers useable in the compounding of fluoroelastomer compositions according to the present invention, examples of alpha,omega-dicarboxy acids are sebacic acid (n = 8), suberic acid (n = 6) and adipic acid (n = 4). Sebacic acid is the preferred dicarboxy acid.

According to the preferred embodiment, the mutual ratios of the units which compose the liquid-crystal polymer (1) are: (a):(b) = 1; (c+d):(a) comprised within the range of from 4 to 8, (d):(c+d) comprised within the range of from 0.2 to 0.6.

The LCP's (1) are prepared by melt-copolymerizing a blend consisting of the dicarboxy acid, 4,4'-diacyloxybiphenyl, p-acyloxybenzoic acid and 2,6-acyloxynaphthoic acid, wherein the acyl preferably is acetyl.

The preparation and characterization of the above said liquid-crystal polymers (1) are disclosed in US-A-4 963 642.

According to the preferred embodiment, the ratios of the various units (a:b:c) which constitute the liquid-crystal polymer (2) are comprised within the range of from 1:1 to 1:1:2.5.

The LCP's (2) are prepared by melt-polymerizing a blend constituted by the dicarboxy acid, 4,4'-diacyloxybiphenyl and p-acyloxybenzoic acid, wherein the acyl preferably is acetyl. Further details as to the preparation and physical-chemical properties of LCP's (2) are reported in US-A-4 833 229.

All of the thermotropic copolyesters disclosed in US-A-4 963 642 and US-A-4 833 229 can be effectively used in the compositions according to the present invention, because they have a transition temperature comprised within the ramge of from 140 to 230°C for LCP's (1) and of from about 200 to 300°C for LCP's (2) However, among LCP's (1) preferable are those having the following mutual ratios of their constituting units: (a):(b) = 1, (c+d):(a) comprised within the range of from 4 to 8, (d):(c+d) comprised within the range of from 0.2 to 0.6; LCP's (1) prepared with such ratios display transition temperatures comprised within the range of from about 160 to 220°C. Among LCP's (2), those having ratios of their constituting units (a):(b):(c) comprised within the range of from 1:1:1 to 1:1:2 are preferred; in fact, LCP's (2) prepared according to such ratios display a transition temperature comprised within the range of from about 200 to about 230°C.

The following examples are reported in order to better illustrate the present invention.

### Examples 1-4

In this series of experiments, the preparations are reported of blends containing Viton B (registered trade mark) and two different liquid-crystal polymers. The first one, referred to as "(A) ",was prepared according to as disclosed in US-A-4 833 229, by starting from sebacic acid, 4,4'-dihydroxybiphenyl and hydroxybenzoic acid in mutual molar ratios of 1:1:2. The second one, referred to as "(B) ",was prepared according to as disclosed in US-A-4 963 642 by starting from sebacic acid, 4,4'-dihydroxybiphenyl, 4-hydroxybenzoic acid and 2,6-hydroxynaphthoic acid in the mutual ratios of 1:1:3:5.

The preparation of the blends was carried out on a Brabender apparatus equipped with a blending chamber. The LCP's are added as small-size chips, in the indicated amount, to the fluoroelastomer, by operating at the temperature of 200°C for 12 minutes and at a rotors revolution speed of 30 rpm.

In Table 1, the end value of torque is reported which was observed during the blending of the polymers.

**Table 1**

| Example | (A) LCP (phr) | Torque (N*m) | (B) LCP (phr) | Torque (N*m) |
|---|---|---|---|---|
| 1 | 0 | 10 | 0 | 10 |
| 2 | 5 | 8 | 5 | 7 |
| 3 | 10 | 6 | 10 | 5 |
| 4 | 20 | 3 | 20 | 2 |

From an analysis of table 1, one will easily realize that the addition of (A) and (B) LCP's to the fluoroelastomeric matrix reduces the viscosity of the molten blend during the processing step.

### Examples 5-8

In this series of experiments, the preparations are reported of blends containing Tecnoflon TN and the (A) and (B) liquid-crystal polymers.

The blending was carried out on a Brabender apparatus equipped with a blending chamber. The LCP's are added as small-size chips, in the indicated amount, to the fluoroelastomer, by operating at the temperature of 200°C for 12 minutes and at a rotors revolution speed of 30 rpm.

In Table 2, the end value of torque is reported which was observed during the blending of the polymers.

**Table 2**

| Example | (A) LCP (phr) | Torque (N*m) | (B) LCP (phr) | Torque (N*m) |
|---|---|---|---|---|
| 5 | 0 | 12 | 0 | 12 |
| 6 | 5 | 10 | 5 | 9 |
| 7 | 10 | 5 | 10 | 5 |
| 8 | 20 | 3 | 20 | 2 |

From an analysis of Table 2, one will easily observe that the addition of (A) and (B) LCP's to the fluoroelastomeric matrix reduces the viscosity of the molten blend during the processing step.

### Examples 9-12

The mechanical properties were measured by means of a model 6025 Instron instrument, by operating at room temperature and with a shear rate of 3.3 min⁻¹. The specimens, of rectangular shape and having sizes of 30x5x1 mm (DIN standard 53,455), were obtained by die-casting at the temperature of 200°C, during a 2-minute time, from blends of Viton B and (B) LCP, by operating according to the same modalities as disclosed in Examples 1-4. The following properties were measured (Table 3): Young's stretch modulus (E); tensile strength (TM) and elongation at break (EB). In some cases, when the size of sample and the geometrical characteristics of the instrument did not allow the breakage of the specimen to be reached, the test result is reported by indicating that the value is higher than the maximal measured value.

**Table 3**

| Example | (B) LCP (phr) | E (MPa) | TM (MPa) | EB (%) |
|---|---|---|---|---|
| 9 | 0 | 2 | 1.5 | >1500 |
| 10 | 5 | 2.5 | 1.5 | >1500 |
| 11 | 10 | 3.5 | 1.3 | 550 |
| 12 | 20 | 12 | 1.3 | 300 |

From the data of Table 3, it clearly appears that the addition of (B) LCP, in larger amounts than 10 phr, considerably increases the value of the Young's stretch modulus of the fluoroelastomeric matrix, without reducing the breakage characteristics thereof.

### Examples 13-16

The mechanical properties were measured by means of a model 6025 Instron instrument, by operating at room temperature and with a shear rate of 3.3 min⁻¹. The specimens, of rectangular shape and having sizes of 30x5x1 mm (DIN standard 53,455), were obtained by die-casting at the temperature of 200°C, during a 2-minute time, from blends of Tecnoflon TN (registered trade mark) and (B) LCP, by operating according to the same modalities as disclosed in Examples 5-8.

The following properties were measured: Young's stretch modulus (E); tensile strength (TM) and elongation at break (EB). In some cases, when the size of sample and the geometrical characteristics of the instrument did not allow the breakage of the specimen to be reached, the test result is reported by indicating that the value is higher than the maximal measured value.

**Table 4**

| Example | (B) LCP (phr) | E (MPa) | TM (MPa) | EB (%) |
|---|---|---|---|---|
| 13 | 0 | 1.8 | 0.8 | >1500 |
| 14 | 5 | 2.3 | 1.1 | >1500 |
| 15 | 10 | 7 | 2.5 | >1500 |
| 16 | 20 | 35 | 1.7 | 400 |

From the data of Table 4, it clearly appears that the addition of (B) LCP, in larger amounts than 10 phr, improves, by a factor of more than three, the elastic modulus and the tensile strength without any meaningful decreases in elongation at break. At higher concentrations, the Young's modulus enormously increases (with an approximately 20-fold increase times as large at 20 phr), but with a considerable decrease in elongation at break.

### Examples 17-20

In this series of examples, all the blends were prepared on a Brabender apparatus equipped with a blending chamber.

The blending of Viton B with (B) LCP, 20 phr, was carried out at 200°C for 12 minutes at a revolution speed of the rotors of 30 rpm, whilst the admixing of carbon black (CB) and of the vulcanization additives to the fluoroelastomer was carried out at the temperature of 50°C, at a rotors speed of 20 rpm, and for the necessary time for the torque to stabilize at a constant value.

The necessary additives for the vulcanization are:
-- "A" masterbatch having the composition: 67% of a fluoroelastomer and 33% of a quaternary phosphonium salt (e.g., tetrabutylphosphonium bromide);
-- "B" masterbatch having the composition: 50% of fluoroelastomer and 50% of bis-phenol (e.g., bis-phenol A, bis-phenol AF);
-- maglite D (magnesium oxide);
-- calcium hydroxide.

The procedure of preparation of the compound to be vulcanized consists of adding to the blend of elastomer (or to the elastomer + LCP), simultaneously, the "A" (2 phr) and "B" (3.6 phr) masterbatches; after a 2-minute blending at 50°C and with a revolution speed of the rotors of 20 rpm, the carbon black is added, if so required (30 phr), and after a further 4-minutes blending, maglite (3.4 phr) and calcium hydroxide (6.9 phr) are added. From now on, the mixing continues until the torque has reached a constant value.

The vulcanization process consists in treating the so obtained compound, charged to a mould of 150x150x2 mm, on a press at the temperature of 177°C, under a pressure of 1500 MPa, for a total time of 11 minutes. The moulded slab is then charged to a air-forced oven and is kept 24 hours at the temperature of 230°C.

In Table 5, the mechanical properties are reported, which were determined on specimens produced by die-casting from vulcanized slabs of Viton B (V), Viton B and (B) LCP (V + LCP) blends, Viton B and carbon black (V + CB) blends, and finally blends of Viton B with (B) LCP and carbon black (V + LCP + CB). In particular, the specimens used in order to determine the Young's modulus are of rectangular shape and of 30x5x2 mm of size (DIN 53,455), whilst the specimens used for the determination of tensile strength and elongation at break are dumb bell shaped specimens of 100x16x3 mm, with a thickness of 2 mm (ASTM D 412 type D).

**Table 5**

| Example | Sample | E (MPa) | TM (MPa) | EB (%) |
|---|---|---|---|---|
| 17 | V | 3.4 | 6.7 | 200 |
| 18 | V+LCP | 12.8 | 11.8 | 120 |
| 19 | V+CB | 33 | 12.8 | 120 |
| 20 | V+LCP+CB | 140 | 20.4 | 50 |

The addition of LCP causes extremely good improvements in modulus and tensile strength both in vulcanized Viton B and in the sample vulcanized and admixed with CB. The decrease in elongation at break values remains contained within acceptable limits.

### Examples 21-24

In this series of examples, all the blends were prepared on a Brabender apparatus equipped with a blending chamber.

The blending of Tecnoflon TN with (B) LCP, 20 phr, was carried out at 200°C for 12 minutes at a revolution speed of the rotors of 30 rpm, whilst the admixing of carbon black (CB) and of the vulcanization additives to the fluoroelastomer was carried out at the temperature of 50°C, at a rotors speed of 20 rpm, and for the necessary time for the torque to stabilize at a constant value.

The necessary additives for the vulcanization are:
-- "A" masterbatch having the composition: 67% of a fluoroelastomer and 33% of a quaternary phosphonium salt (e.g., tetrabutylphosphonium bromide);
-- "B" masterbatch having the composition: 50% of fluoroelastomer and 50% of bis-phenol (e.g., bis-phenol A, bis-phenol AF);
-- maglite D (magnesium oxide);
-- calcium hydroxide.

The procedure of preparation of the compound to be vulcanized consists of adding to the elastomer (or to the elastomer + LCP blend), simultaneously, the "A" (2 phr) and "B" (3.6 phr) masters; after a 2-minute blending at 50°C and with a revolution speed of the rotors of 20 rpm, the carbon black is added, if so required (30 phr), and after a further 4-minutes blending, maglite (3.4 phr) and calcium hydroxide (6.9 phr) are added. From now on, the mixing continues until the torque has reached a constant value.

The vulcanization process consists in treating the so obtained compound, charged to a mould of 150x150x2 mm, on a press at the temperature of 177°C, under a pressure of 1500 MPa, for a total time of 11 minutes. The moulded slab is then charged to a air-forced oven and is kept 24 hours at the temperature of 230°C.

In Table 6, the mechanical properties are reported, which were determined on specimens produced by die-casting from vulcanized slabs of Tecnoflon TN (T), Tecnoflon TN and (B) LCP (T + LCP) blends, Tecnoflon TN and carbon black (T + CB) blends, and finally blends of Tecnoflon TN with (B) LCP and carbon black (T + LCP + CB). In particular, the specimens used in order to determine the Young's modulus are of rectangular shape and of 30x5x2 mm of size (DIN 53,455), whilst the specimens used for the determination of tensile strength and elongation at break are dumb bell shaped specimens of 100x16x3 mm, with a thickness of 2 mm (ASTM D 412 type D).

**Table 6**

| Example | Sample | E (MPa) | TM (MPa) | EB (%) |
|---|---|---|---|---|
| 21 | T | 2.8 | 8.2 | 200 |
| 22 | T+LCP | 12 | 9.6 | 120 |
| 23 | T+CB | 24 | 12.3 | 70 |
| 24 | T+LCP+CB | 95 | 16.8 | 50 |

The addition of LCP causes extremely good improvements in Young's modulus and tensile strength both in vulcanized Tecnoflon TN and in the sample vulcanized and admixed with CB. The decrease in elongation at break values remains contained within acceptable limits.

### Example 25

The behaviour of mechanical characteristics with varying temperature for the compounds disclosed in Examples 17-20 was evaluated by dynamic-mechanical spectroscopy using a Rheometrics mod. RSA2 Solid Analyzer instrument. The specimens, of 48x5x 2 mm of size, were submitted to a bending deformation (Dual Cantilever) of less than 1%, with an oscillation frequency of 1 Hz, within a temperature range comprised between -100°C and 300°C and operating with a heating rate of 2°C/minute.

In Table 7, the values of temperature are reported at which the samples displayed a value of elastic modulus of 200 MPa.

**Table 7**

| Sample | Temperature (°C) |
|---|---|
| VITON B | -13 |
| VITON B + (B) LCP | -6 |
| VITON B + CB | 7 |
| VITON B + (B) LCP + CB | 104 |

The thermomechanical strength of vulcanized Viton B, above all in the presence of CB, is enormously increased by the addition of LCP. In particular, the Viton B material admixed with LCP and carbon black displays the same stiffness as of Viton B admixed with carbon black, but a 100°C higher temperature.

### Example 26

The behaviour of mechanical characteristics with varying temperature of the compounds disclosed in Examples 21-24 was evaluated by using the same measurement technique as disclosed in Example 25.

In Table 8, the values of temperature are reported at which the samples displayed a value of elastic modulus of 200 MPa.

**Table 8**

| Sample | Temperature (°C) |
|---|---|
| TECNOFLON TN | -8 |
| TECNOFLON TN + (B) LCP | -4 |
| TECNOFLON TN + CB | 0 |
| TECNOFLON TN + (B) LCP + CB | 100 |

The thermomechanical strength of vulcanized Tecnoflon TN, above all in the presence of CB, is enormously increased by the addition of LCP. In particular, the Tecnoflon TN material admixed with LCP and carbon black displays the same stiffness as of Tecnoflon TN admixed with carbon black, but at a 100°C higher temperature.

## Claims

1. Fluoroelastomer composition displaying a high section modulus and improved processability, comprising at least one fluoroelastomer and at least one thermotropic liquid-crystal polymer, characterized in that said thermotropic liquid-crystal polymer is selected from:
(1) a thermotropic copolyester comprising, in its molecule, units derived from
(a) a saturated, aliphatic alpha,omega-dicarboxy acid
HOOC-(CH₂)ₙ-COOH
wherein n is comprised within the range of from 3 to 8,
(b) 4,4'-dihydroxybiphenyl,
(c) 4-hydroxybenzoic acid,
(d) 2,6-hydroxynaphthoic acid;
with the following values of the ratios of the costituting units to each other: (a):(b) = 1, (c+d):(a) comprised within the range of from 1 to 8, (d):(c+d) comprised within the range of from 0.1 to 1;
(2) a thermotropic copolyester comprising, in its molecule, only units derived from (a), (b) and (c) in a molar ratio comprised within the range of from 1:1:0.5 to 1:1:8.

2. Composition according to claim 1, characterized in that the thermotropic copolyester is present in amounts comprised within the range of from 2 to 40 parts of LCP per 100 parts of fluoroelastomer.

3. Composition according to claim 2, characterized in that the thermotropic copolyester is present in amounts comprised within the range of from 4 to 30 parts of LCP per 100 parts of fluoroelastomer.

4. Composition according to claim 1, characterized in that said alpha,omega-dicarboxy acid is sebacic acid.

5. Composition according to claim 1, characterized in that the mutual ratios of the units which compose the liquid-crystal polymer (1) are, by weight: (a):(b) = 1; (c+d):(a) comprised within the range of from 4 to 8, (d):(c+d) comprised within the range of from 0.2 to 0.6.

6. Composition according to claim 1, characterized in that the ratio, by weight, of the various units (a:b:c) which constitute the liquid-crystal polymer (2) is comprised within the range of from 1:1 to 1:1:2.5.

7. Elastomeric composition according to claim 1, characterized in that the fluorinated elastomer is selected from polymers or copolymers of vinylidene fluoride, hexafluoropropylene, tetrafluoroethylene.

8. Compositions according to one or more of the preceding claims, characterized in that they additionally contain an acid acceptor, aromatic diols and ammonium or phosphonium salts.

9. Composition according to claim 8, characterized in that said aromatic diol is a bis-phenol and the acid acceptor is selected from CaO, MgO, PbO, ZnO, Ca(OH)₂.

10. Composition according to one or more of the preceding claims, characterized in that such a composition is vulcanized.
